# EUROPEAN PATENT APPLICATION

(11) **EP 4 236 538 A1**
(43) Date of publication of application: **30.08.2023**
(21) Application number: 21883325.9
(22) Date of filing: 22.10.2021
(51) Int. Cl.: H04W 72/04, H04W 72/12, H04L 5/00, H04W 56/00, H04W 84/06

(54) **METHOD FOR PERFORMING SWITCHING OF BWP BY TERMINAL IN WIRELESS COMMUNICATION SYSTEM AND DEVICE THEREFOR**

(30) Priority: 22.10.2020 KR 20200137388
(71) Applicant: LG Electronics Inc., Yeongdeungpo-gu Seoul, 07336 (KR)
(72) Inventor: PARK, Haewook, Seoul 06772 (KR); AHN, Joonkui, Seoul 06772 (KR); SHIN, Seokmin, Seoul 06772 (KR)
(74) Representative: Frenkel, Matthias Alexander
(86) International application number: PCT/KR2021/014887
(87) International publication number: WO 2022/086258

(57) **Abstract**

Disclosed according to various embodiments are a method for performing switching of a bandwidth part (BWP) by a terminal in a wireless communication system supporting a non-terrestrial network (NTN) and a device therefor. Specifically, disclosed are a method and a device therefor, the method comprising the steps of: receiving a first signal which includes scheduling information requesting for switching of a BWP; transmitting, to a base station, a second signal in response to the first signal; and performing the switching of the BWP at a first time point subsequent to the transmission of the second signal.

## Description

### [Technical Field]

The present disclosure relates to a method of performing switching of a bandwidth part (BWP) by a user equipment (UE) in a wireless communication system supporting a non-terrestrial network (NTN), and a device for the method.

### [Background Art]

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/LTEs sensitive to reliability and latency are under discussion. A nextgeneration radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### [Disclosure]

### [Technical Problem]

An objective of the present disclosure is to provide a method and device for minimizing unnecessary waste of resources that may occur due to an increase in a round-trip time (RTT) by configuring BWP switching to be performed after a transmission time point of a signal confirming reception of a signal for scheduling BWP switching in response to an increase in the RTT due to propagation delay in an NTN system.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### [Technical Solution]

According to an aspect, a method of performing switching of a bandwidth part (BWP) by a user equipment (UE) in a wireless communication system supporting a non-terrestrial network (NTN) includes receiving a first signal including scheduling information requesting the switching of the BWP, transmitting a second signal in response to the first signal to a base station (BS), and performing the switching of the BWP at a first time point after transmission of the second signal.

The switching of the BWP may be performed at the first time point after a first preset time from a transmission time of the second signal.

The LTE may operate a first timer related to inactivity of the BWP at a second time point after a second preset time from a transmission time of the second signal.

The switching of the BWP may be performed at a first time point after a first preset time from a transmission time of Acknowledgement/Negative Acknowledgement (ACK/NACK) for reception of the PDSCH based on the first signal including scheduling information of a Physical Data Shared Channel (PDSCH).

The switching of the BWP may be performed at a first time point after a first preset time from a transmission time of the PUSCH based on the first signal including scheduling information of a Physical Uplink Shared Channel (PUSCH).

The PUSCH may be transmitted through an existing BWP before switching to the BWP according to the scheduling information.

The first signal may further include additional switching information about a switching possibility of an additional BWP.

The UE may skip operating of a first time of the BWP based on the first signal including the additional switching information.

A preset offset may be further added to a duration of the first timer based on propagation delay with the NTN.

The scheduling information may be obtained through DCI or MAC-CE included in the first signal.

According to another aspect, a method of scheduling switching of a bandwidth part (BWP) to a user equipment (UE) by a base station (BS) in a wireless communication system supporting a non-terrestrial network (NTN) includes transmitting a first signal including scheduling information requesting switching to a specific BWP, receiving a second signal in response to the first signal from the UE, and transmitting data through the specific BWP after a reception time point of the second signal.

The BS may further transmit a third signal confirming reception of the second signal, and the first time point may be specified after a first preset signal from a transmission time point of the third signal.

According to another aspect, a user equipment (UE) for performing switching of a bandwidth part (BWP) in a wireless communication system supporting a non-terrestrial network (NTN) includes a radio frequency (RF) transceiver, and a processor connected to the RF transceiver, wherein the processor controls the RF transceiver to receive a first signal including scheduling information requesting the switching of the BWP and transmit a second signal in response to the first signal to the NTN, and performs the switching of the BWP at a first time point after transmission of the second signal

According to another aspect, a base station (BS) for scheduling switching of a bandwidth part (BWP) to a suer equipment (UE) in a wireless communication system supporting a non-terrestrial network (NTN) includes a radio frequency (RF) transceiver, and a processor connected to the RF transceiver, wherein the processor controls the RF transceiver to transmit a first signal including scheduling information requesting switching to a specific BWP and receive a second signal in response to the first signal from the UE, and transmits data through the specific BWP after a reception time point of the second signal.

According to another aspect, a chip set performing switching of a bandwidth part (BWP) in a wireless communication system supporting a non-terrestrial network (NTN) includes at least one processor, and at least one memory operatively connected to the at least one processor and configured to cause the at least one processor to perform an operation when executed, wherein the operation includes receiving a first signal including scheduling information requesting the switching of the BWP, transmitting a second signal in response to the first signal to the NTN; and performing the switching of the BWP at a first time point after transmission of the second signal.

According to another aspect, a computer readable storage medium including at least one computer program performing an operation for performing switching of a bandwidth part (BWP) in a wireless communication system supporting a non-terrestrial network (NTN) includes at least one computer program configured to perform an operation of the switching of the BWP by the at least one processor; and a computer readable storage medium with the at least one computer program stored therein, wherein a first signal including scheduling information requesting the switching of the BWP is received, a second signal in response to the first signal is transmitted to the NTN, and the switching of the BWP at a first time point after transmission of the second signal is performed.

### [Advantageous Effects]

Various embodiments may minimize unnecessary waste of resources that may occur due to an increase in a round-trip time (RTT) by configuring BWP switching to be performed after a transmission time point of a signal confirming reception of a signal for scheduling BWP switching in response to an increase in the RTT due to propagation delay in an NTN system.

Effects to be achieved by embodiment(s) are not limited to what has been particularly described hereinabove and other effects not mentioned herein will be more clearly understood by persons skilled in the art to which embodiment(s) pertain from the following detailed description.

### [Description of Drawings]

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates a procedure in which a base station transmits a downlink signal to a UE.
FIG. 6 illustrates a procedure in which a LTE transmits an uplink signal to a base station.
FIG. 7 illustrates a non-terrestrial network (NTN).
FIG. 8 illustrates an overview and a scenario of an NTN.
FIG. 9 illustrates TA components of the NTN.
FIG. 10 is a diagram for explaining a timer-based BWP switching method.
FIG. 11 is a flowchart for explaining a method of performing a LTL transmission operation by a UE based on the above-described embodiments.
FIG. 12 is a flowchart illustrating a method of performing a DL reception operation by a UE based on the above-described embodiments;
FIG. 13 is a flowchart for explaining a method for performing a LTL reception operation by a BS based on the above-described embodiments.
FIG. 14 is a flowchart illustrating a method for performing a DL transmission operation by a BS based on the above-described embodiments.
FIG. 15 is a diagram for explaining an operation of transmitting and receiving a UL channel between a UE and a BS.
FIG. 16 is a diagram for explaining a method of performing an operation of switching a BWP by a UE.
FIG. 17 is a diagram for explaining a method of scheduling BWP switching to a LTE by a BS.
FIG. 18 illustrates a communication system applied to the present disclosure.
FIG. 19 illustrates wireless devices applicable to the present disclosure.
FIG. 20 illustrates another example of a wireless device to which the present disclosure is applied.

### [Best Mode]

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (LTEs) to directly exchange voice or data between LTEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/LTEs sensitive to reliability and latency are under discussion. A nextgeneration radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

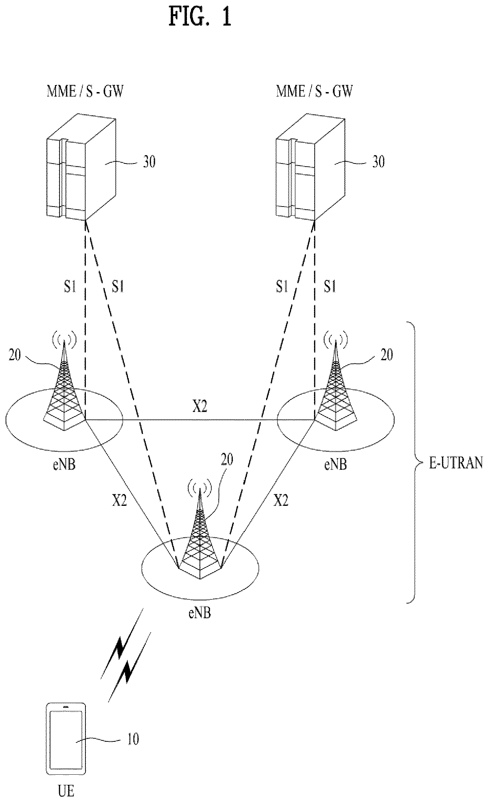

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a LTE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

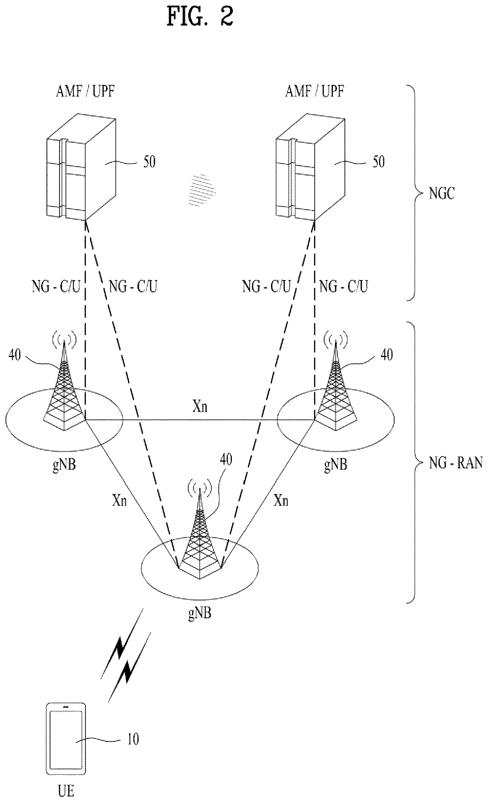

FIG. 2 illustrates the structure of a NR system to which the present disclosure is applicable.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. AgNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

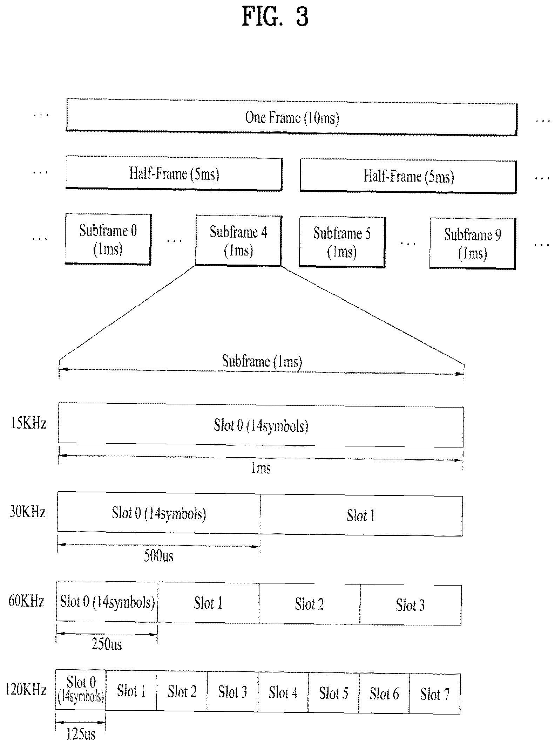

FIG. 3 illustrates the structure of a NR radio frame to which the present disclosure is applicable.

Referring to FIG. 3, a radio frame may be used for LTL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15^{∗}2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

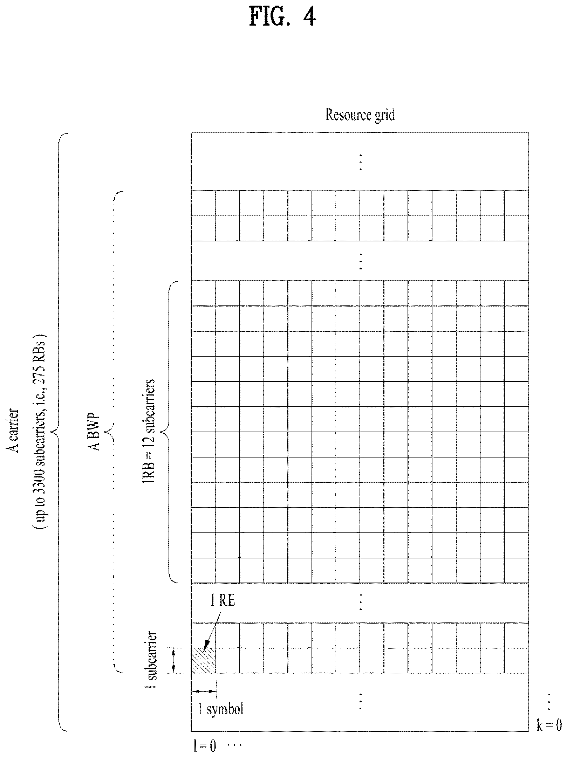

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a LTE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the LTE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., subcarrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/LTL BWP for the UE associated with the wideband CC and activate at least one DL/UL BWP among the configured DL/UL BWP(s) at a specific time (through L1 signaling, MAC CE or RRC signalling, etc.). The BS may instruct the LTE to switch to another configured DL/UL BWP (through L1 signaling, MAC CE or RRC signalling, etc.). Alternatively, when a timer expires, the LTE may switch to a predetermined DL/LTL BWP. The activated DL/LTL BWP is defined as an active DL/UL BWP. The LTE may fail to receive DL/UL BWP configuration during an initial access procedure or before an RRC connection is set up. A DL/UL BWP assumed by the LTE in this situation is defined as an initial active DL/LTL BWP.

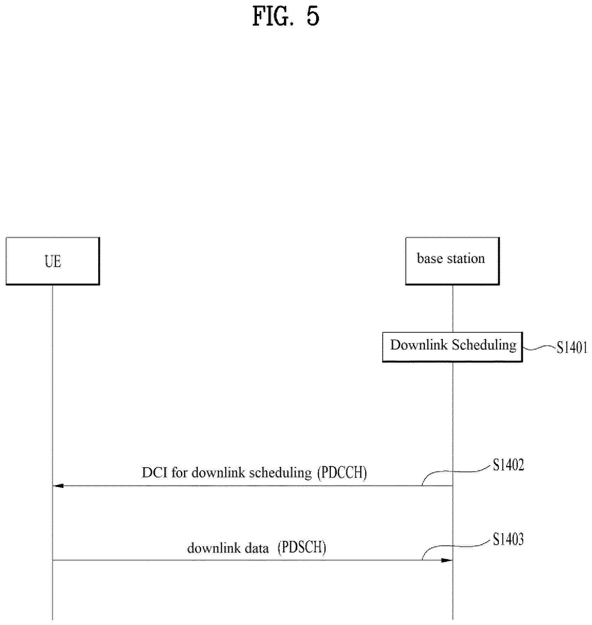

FIG. 5 illustrates a procedure in which a base station transmits a downlink (DL) signal to a UE

Referring to FIG. 5, the BS schedules DL transmission in relation to, for example, frequency/time resources, a transport layer, a DL precoder, and an MCS (S1401). In particular, the BS may determine a beam for PDSCH transmission to the UE through the above-described operations.

The UE receives downlink control information (DCI) for DL scheduling (i.e., including scheduling information about the PDSCH) from the BS on the PDCCH (S1402).

DCI format 1_0 or 1_1 may be used for DL scheduling. In particular, DCI format 1_1 includes the following information: an identifier for DCI formats, a bandwidth part indicator, frequency domain resource assignment, time domain resource assignment, a PRB bundling size indicator, a rate matching indicator, a ZP CSI-RS trigger, antenna port(s), transmission configuration indication (TCI), an SRS request, and a demodulation reference signal (DMRS) sequence initialization.

In particular, according to each state indicated in the antenna port(s) field, the number of DMRS ports may be scheduled, and single-user (SU)/multi-user (MU) transmission may also be scheduled.

In addition, the TCI field is configured in 3 bits, and the QCL for the DMRS is dynamically indicated by indicating a maximum of 8 TCI states according to the value of the TCI field.

The UE receives DL data from the BS on the PDSCH (S1403).

When the UE detects a PDCCH including DCI format 1_0 or 1_1, it decodes the PDSCH according to an indication by the DCI. Here, when the UE receives a PDSCH scheduled by DCI format 1, a DMRS configuration type may be configured for the UE by a higher layer parameter `dmrs-Type', and the DMRS type is used to receive the PDSCH. In addition, the maximum number of front-loaded DMRS symbols for the PDSCH may be configured for the UE by the higher layer parameter 'maxLength'.

In the case of DMRS configuration type 1, when a single codeword is scheduled for the LTE and an antenna port mapped to an index of {2, 9, 10, 11, or 30} is specified, or when two codewords are scheduled for the LTE, the LTE assumes that any of the remaining orthogonal antenna ports is not associated with PDSCH transmission to another UE.

Alternatively, in the case of DMRS configuration type 2, when a single codeword is scheduled for the UE and an antenna port mapped to an index of {2, 10, or 23} is specified, or when two codewords are scheduled for the UE, the UE assumes that any of the remaining orthogonal antenna ports is not associated with PDSCH transmission to another UE.

When the LTE receives the PDSCH, it may assume that the precoding granularity P' is a consecutive resource block in the frequency domain. Here, P' may correspond to one of {2, 4, wideband}.

When P' is determined as wideband, the LTE does not expect scheduling with non-contiguous PRBs, and may assume that the same precoding is applied to the allocated resources.

On the other hand, when P' is determined as any one of {2, 4}, a precoding resource block group (PRG) is divided into P' contiguous PRBs. The number of actually contiguous PRBs in each PRG may be greater than or equal to 1. The UE may assume that the same precoding is applied to contiguous DL PRBs in the PRG.

In order to determine a modulation order, a target code rate, and a transport block size in the PDSCH, the UE first reads the 5-bit MCD field in the DCI, and determines the modulation order and the target code rate. Then, it reads the redundancy version field in the DCI, and determines the redundancy version. Then, the LTE determines the transport block size based on the number of layers and the total number of allocated PRBs before rate matching.

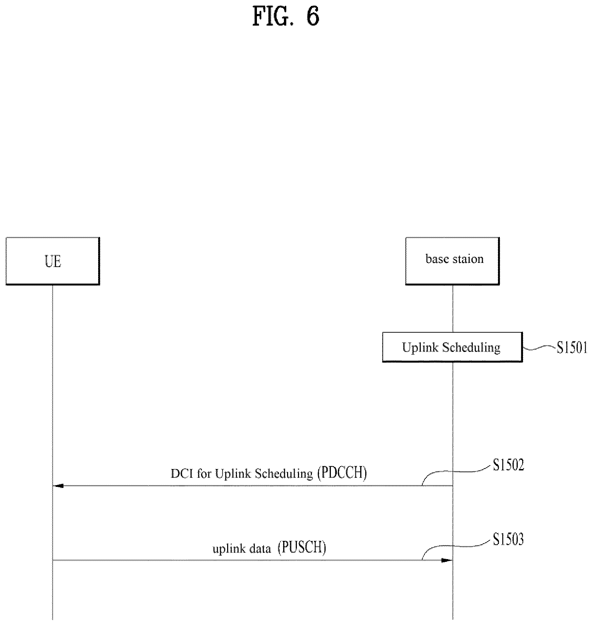

FIG. 6 illustrates a procedure in which a LTE transmits an uplink (LTL) signal to a BS.

Referring to FIG. 6, the BS schedules UL transmission in relation to, for example, frequency/time resources, a transport layer, a UL precoder, and an MCS (S1501). In particular, the BS may determine, through the above-described operations, a beam for PUSCH transmission of the UE.

The UE receives DCI for UL scheduling (including scheduling information about the PUSCH) from the BS on the PDCCH (S1502).

DCI format 0_0 or 0_1 may be used for UL scheduling. In particular, DCI format 0_1 includes the following information: an identifier for DCI formats, a UL/supplementary UL (SLTL), a bandwidth part indicator, frequency domain resource assignment, time domain resource assignment, a frequency hopping flag, a modulation and coding scheme (MCS), an SRS resource indicator (SRI), precoding information and number of layers, antenna port(s), an SRS request, DMRS sequence initialization, and LTL shared channel (LTL-SCH) indicator.

In particular, SRS resources configured in an SRS resource set associated with the higher layer parameter `usage' may be indicated by the SRS resource indicator field. In addition, `spatialRelationInfo' may be configured for each SRS resource, and the value thereof may be one of {CRI, SSB, SRI}.

The LTE transmits LTL data to the BS on PUSCH (S1503).

When the UE detects a PDCCH including DCI format 0_0 or 0_1, it transmits the PUSCH according to an indication by the DCI.

For PUSCH transmission, two transmission schemes are supported: codebook-based transmission and non-codebook-based transmission:
i) When the higher layer parameter `txConfig' is set to 'codebook', the UE is configured for codebook-based transmission. On the other hand, when the higher layer parameter `txConfig' is set to `nonCodebook', the UE is configured for non-codebook based transmission. When the higher layer parameter `txConfig' is not configured, the LTE does not expect scheduling by DCI format 0_1. When the PUSCH is scheduled according to DCI format 0_0, PUSCH transmission is based on a single antenna port.
   In the case of codebook-based transmission, the PUSCH may be scheduled by DCI format 0_0 or DCI format 0_1, or scheduled semi-statically. When the PUSCH is scheduled by DCI format 0_1, the UE determines the PUSCH transmission precoder based on the SRI, transmit precoding matrix indicator (TPMI) and transmission rank from the DCI, as given by the SRS resource indicator field and the precoding information and number of layers field. The TPMI is used to indicate a precoder to be applied across antenna ports, and corresponds to an SRS resource selected by the SRI when multiple SRS resources are configured. Alternatively, when a single SRS resource is configured, the TPMI is used to indicate a precoder to be applied across antenna ports, and corresponds to the single SRS resource. A transmission precoder is selected from the UL codebook having the same number of antenna ports as the higher layer parameter 'nrofSRS-Ports'. When the higher layer in which the UE is set to `codebook' is configured with the parameter `txConfig', at least one SRS resource is configured for the UE. The SRI indicated in slot n is associated with the most recent transmission of the SRS resource identified by the SRI, where the SRS resource precedes the PDCCH carrying the SRI (i.e., slot n).
ii) In the case of non-codebook-based transmission, the PUSCH may be scheduled by DCI format 0_0 or DCI format 0_1, or scheduled semi-statically. When multiple SRS resources are configured, the UE may determine the PUSCH precoder and transmission rank based on the wideband SRI. Here, the SRI is given by the SRS resource indicator in the DCI or by the higher layer parameter `srs-ResourceIndicator'. The UE may use one or multiple SRS resources for SRS transmission. Here, the number of SRS resources may be configured for simultaneous transmission within the same RB based on LTE capability. Only one SRS port is configured for each SRS resource. Only one SRS resource may be configured by the higher layer parameter `usage' set to `nonCodebook'. The maximum number of SRS resources that may be configured for non-codebook-based LTL transmission is 4. The SRI indicated in slot n is associated with the most recent transmission of the SRS resource identified by the SRI, where the SRS transmission precedes the PDCCH carrying the SRI (i.e., slot n).

### Non-Terrestrial Networks reference

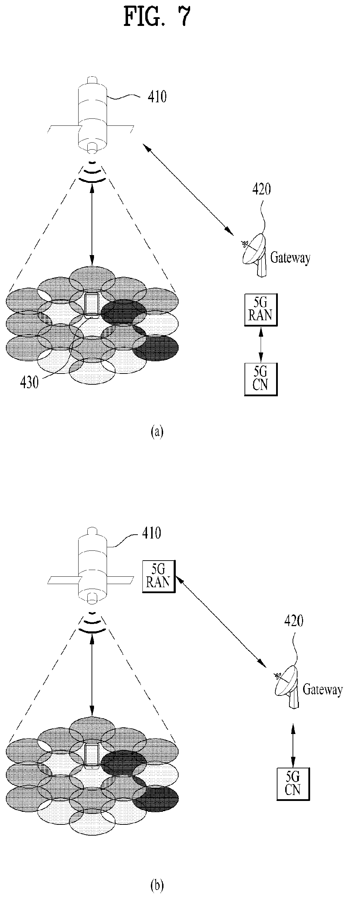

FIG. 7 illustrates a non-terrestrial network (NTN).

A non-terrestrial network (NTN) refers to a wireless network configured using satellites (e.g., geostationary earth orbit satellites (GEO)/low-earth orbit satellites (LEO)). Based on the NTN, coverage may be extended and a highly reliable network service may be provided. For example, the NTN may be configured alone, or may be combined with a conventional terrestrial network to configure a wireless communication system. For example, in the NTN network, i) a link between a satellite and a UE, ii) a link between satellites, iii) a link between a satellite and a gateway, and the like may be configured.

The following terms may be used to describe the configuration of a wireless communication system employing satellites.
- Satellite: a space-borne vehicle embarking a bent pipe payload or a regenerative payload telecommunication transmitter, placed into Low-Earth Orbit (LEO) typically at an altitude between 500 km to 2000 km, Medium-Earth Orbit (MEO) typically at an altitude between 8000 to 20000 lm, or Geostationary satellite Earth Orbit (GEO) at 35 786 km altitude.
- Satellite network: Network, or segments of network, using a space-borne vehicle to embark a transmission equipment relay node or base station.
- Satellite RAT: a RAT defined to support at least one satellite.
- 5G Satellite RAT: a Satellite RAT defined as part of the New Radio.
- 5G satellite access network: 5G access network using at least one satellite.
- Terrestrial: located at the surface of Earth.
- Terrestrial network: Network, or segments of a network located at the surface of the Earth.

Use cases that may be provided by a communication system employing a satellite connection may be divided into three categories. The "Service Continuity" category may be used to provide network connectivity in geographic areas where 5G services cannot be accessed through the wireless coverage of terrestrial networks. For example, a satellite connection may be used for a LTE associated with a pedestrian user or a LTE on a moving land-based platform (e.g., car, coach, truck, train), air platform (e.g., commercial or private jet) or marine platform (e.g., marine vessel). In the "Service Ubiquity" category, when terrestrial networks are unavailable (due to, for example, disaster, destruction, economic situations, etc.), satellite connections may be used for IOT/public safety-related emergency networks/home access, etc. The "Service Scalability" category includes services using wide coverage of satellite networks.

For example, a 5G satellite access network may be connected to a 5G core Network. In this case, the satellite may be a bent pipe satellite or a regenerative satellite. The NR radio protocols may be used between the UE and the satellite. Also, F1 interface may be used between the satellite and the gNB.

As described above, a non-terrestrial network (NTN) refers to a wireless network configured using a device that is not fixed on the ground, such as satellite. A representative example is a satellite network. Based on the NTN, coverage may be extended and a highly reliable network service may be provided. For example, the NTN may be configured alone, or may be combined with an existing terrestrial network to configure a wireless communication system.

Use cases that may be provided by a communication system employing an NTN may be divided into three categories. The "Service Continuity" category may be used to provide network connectivity in geographic areas where 5G services cannot be accessed through the wireless coverage of terrestrial networks. For example, a satellite connection may be used for a UE associated with a pedestrian user or a UE on a moving land-based platform (e.g., car, coach, truck, train), air platform (e.g., commercial or private jet) or marine platform (e.g., marine vessel). In the "Service Ubiquity" category, when terrestrial networks are unavailable (due to, for example, disaster, destruction, economic situations, etc.), satellite connections may be used for IOT/public safety-related emergency networks/home access, etc. The "Service Scalability" category includes services using wide coverage of satellite networks.

Referring to FIG. 7, the NTN includes one or more satellites 410, one or more NTN gateways 420 capable of communicating with the satellites, and one or more UEs (/BSs) 430 capable of receiving mobile satellite services from the satellites. For simplicity, the description is focused on the example of the NTN including satellites, but is not intended to limit the scope of the present disclosure. Accordingly, the NTN may include not only the satellites, but also aerial vehicles (Unmanned Aircraft Systems (UAS) encompassing tethered UAS (TUA), Lighter than Air UAS (LTA), Heavier than Air UAS (HTA), all operating in altitudes typically between 8 and 50 km including High Altitude Platforms (HAPs)).

The satellite 410 is a space-borne vehicle equipped with a bent pipe payload or a regenerative payload telecommunication transmitter and may be located in a low earth orbit (LEO), a medium earth orbit (MEO), or a geostationary earth orbit (GEO). The NTN gateway 420 is an earth station or gateway existing on the surface of the earth, and provides sufficient RF power/sensitivity to access the satellite. The NTN gateway corresponds to a transport network layer (TNL) node.

The NTN may have i) a link between a satellite and a UE, ii) a link between satellites, iii) a link between a satellite and an NTN gateway. A service link refers to a radio link between a satellite and a UE. Inter-satellite links (ISLs) between satellites may be present when there are multiple satellites. A feeder link refers to a radio link between an NTN gateway and a satellite (or UAS platform). The gateway may be connected to a data network and may communicate with a satellite through the feeder link. The UE may communicate via the satellite and service link.

As NTN operation scenarios, two scenarios which are based on transparent payload and regenerative payload, respectively may be considered. FIG. 7(a) shows an example of a scenario based on a transparent payload. In the scenario based on the transparent payload, the signal repeated by the payload is not changed. The satellites 410 repeat the NR-Uu radio interface from the feeder link to the service link (or vice versa), and the satellite radio interface (SRI) on the feeder link is NR-Uu. The NTN gateway 420 supports all functions necessary to transfer the signal of the NR-Uu interface. Also, different transparent satellites may be connected to the same gNB on the ground. FIG. 7(b) shows an example of a scenario based on a regenerative payload. In the scenario based on the regenerative payload, the satellite 410 may perform some or all of the functions of a conventional BS (e.g., gNB), and may thus perform some or all of frequency conversion/demodulation/decoding/modulation. The service link between the UE and a satellite is established using the NR-Uu radio interface, and the feeder link between the NTN gateway and a satellite is established using the satellite radio interface (SRI). The SRI corresponds to a transport link

The UE 430 may be connected to 5GCN through an NTN-based NG-RAN and a conventional cellular NG-RAN simultaneously. Alternatively, the UE may be connected to the 5GCN via two or more NTNs (e.g., LEO NTN and GEO NTN, etc.) simultaneously.

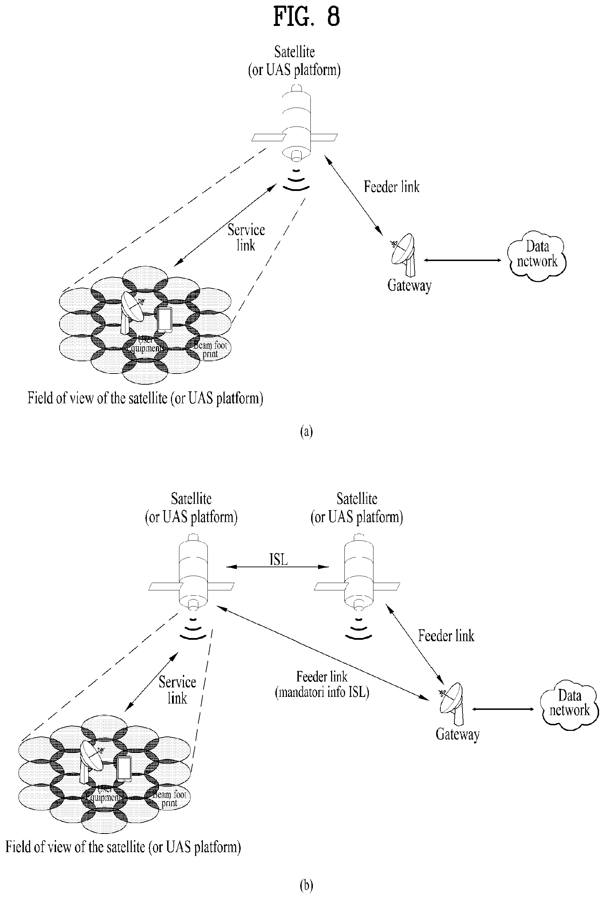

FIG. 8 illustrates an overview and a scenario of an NTN.

NTN refers to a network or network segment in which a satellite (or UAS platform) uses RF resources. Typical scenarios of the NTN providing access to a UE include an NTN scenario based on a transparent payload as shown in FIG. 8(a) and an NTN scenario based on a regenerative payload as shown in FIG. 8(b).

NTN typically features the following elements,
- One or several sat-gateways that connect the Non-Terrestrial Network to a public data network
- A GEO satellite is fed by one or several sat-gateways which are deployed across the satellite targeted coverage (e.g. regional or even continental coverage). We assume that UE in a cell are served by only one sat-gateway.
- ANon-GEO satellite served successively by one or several sat-gateways at a time. The system ensures service and feeder link continuity between the successive serving sat-gateways with sufficient time duser equipment and the satellite (or UAS platform).
- Feeder link or radio link between satellite-gateway and satellite (or UAS platform)
- Service link or radio link between LTE and satellite (or UAS platform)
- A satellite (or UAS platform) which may implement either a transparent or a regenerative (with on board processing) payload. The satellite (or UAS platform) generate beams typically generate several beams over a given service area bounded by its field of view. The footprints of the beams are typically of elliptic shape. The field of view of a satellites (or UAS platforms) depends on the on board antenna diagram and min elevation angle.
- A transparent payload: Radio Frequency filtering, Frequency conversion and amplification. Hence, the waveform signal repeated by the payload is un-changed;
- A regenerative payload: Radio Frequency filtering, Frequency conversion and amplification as well as demodulation/decoding, switch and/or routing, coding/modulation. This is effectively equivalent to having all or part of base station functions (e.g. gNB) on board the satellite (or UAS platform).
- Inter-satellite links (ISL) optionally in case of a constellation of satellites. This will require regenerative payloads on board the satellites. ISL may operate in RF frequency or optical bands.
- User Equipment is served by the satellite (or UAS platform) within the targeted service area.

Table 5 below defines various types of satellites (or UAS platforms).

**[Table 5]**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5-200 km |
| High Elliptical Orbit (HEO) satellite | 400 - 50000 km | Elliptical around the earth | 200 - 3500 km |

Typically, GEO satellite and UAS are used to provide continental, regional or local service. A constellation of LEO and MEO is used to provide services in both Northern and Southern hemispheres. In some case, the constellation can even provide global coverage including polar regions. For the later, this requires appropriate orbit inclination, sufficient beams generated and inter-satellite links. HEO satellite systems are not considered in this document.

An NTN that provides access to a terminal in six reference scenarios described below can be considered.
- Circular orbiting and notional station keeping platforms.
- Highest RTD constraint
- Highest Doppler constraint
- A transparent and a regenerative payload
- One ISL case and one without ISL. Regenerative payload is mandatory in the case of inter-satellite links.
- Fixed or steerable beams resulting respectively in moving or fixed beam foot print on the ground

Six scenarios are considered as depicted in Table 6 and are detailed in Table 7.

**[Table 6]**

| | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

**[Table 7]**

| | | | |
|---|---|---|---|
| Scenarios | GEO based non-terrestrial access network (Scenario A and B) | LEO based non-terrestrial access network (Scenario C & D) | |
| Orbit type | notional station keeping position fixed in terms of elevation/azimuth with respect to a given earth point | circular orbiting around the earth | |
| Altitude | 35,786 km | 600 km | |
| | | 1,200 km | |
| Spectrum (service link) | <6 GHz (e.g. 2 GHz) | | |
| | >6 GHz (e.g. DL 20 GHz, UL 30 GHz) | | |
| Max channel bandwidth capability (service link) | 30 MHz for band < 6 GHz | | |
| | 1 GHz for band > 6 GHz | | |
| Payload | Scenario A : Transparent (including radio frequency function only) | Scenario C: Transparent (including radio frequency function only) | |
| | Scenario B: regenerative (including all or part of RAN functions) | Scenario D: Regenerative (including all or part of RAN functions) | |
| Inter-Satellite link | No | Scenario C: No | |
| | | Scenario D: Yes/No (Both cases are possible.) | |
| Earth-fixed beams | Yes | Scenario C1: Yes (steerable beams), see note 1 | |
| | | Scenario C2: No (the beams move with the satellite) | |
| | | Scenario D 1: Yes (steerable beams), see note 1 | |
| | | Scenario D 2: No (the beams move with the satellite) | |
| Max beam foot print size (edge to edge) regardless of the elevation angle | 3500 km (Note 5) | 1000 km | |
| Min Elevation angle for both sat-gateway and user equipment | 10° for service link and 10° for feeder link | 10° for service link and 10° for feeder link | |
| Max distance between satellite and user equipment at min elevation angle | 40,581 km | 1,932 km (600 km altitude) | |
| | | 3,131 km (1,200 km altitude) | |
| Max Round Trip Delay (propagation delay only) | Scenario A: 541.46 ms (service and feeder links) | Scenario C: (transparent payload: service and feeder links) | |
| | | | - 25.77 ms (600km) |
| | | | - 41.77 ms (1200km) |
| | Scenario B: 270.73 ms (service link only) | Scenario D: (regenerative payload: service link only) | |
| | | | - 12.89 ms (600km) |
| | | | - 20.89 ms (1200km) |
| Max differential delay within a cell (Note 6) | 10.3 ms | 3.12 ms and 3.18 ms for respectively 600km and 1200km | |
| Max Doppler shift (earth fixed user equipment) | 0.93 ppm | 24 ppm (600km) | |
| | | 21ppm(1200km) | |
| Max Doppler shift variation (earth fixed user equipment) | 0.000 045 ppm/s | 0.27ppm/s (600km) | |
| | | 0.13ppm/s(1200km) | |
| User equipment motion on the earth | 1200 km/h (e.g. aircraft) | 500 km/h (e.g. high speed train) | |
| | | Possibly 1200 km/h (e.g. aircraft) | |
| User equipment antenna types | Omnidirectional antenna (linear polarisation), assuming 0 dBi | | |
| | Directive antenna (up to 60 cm equivalent aperture diameter in circular polarisation) | | |
| User equipment Tx power | Omnidirectional antenna: LTE power class 3 with up to 200 mW | | |
| | Directive antenna: up to 20 W | | |
| User equipment Noise figure | Omnidirectional antenna: 7 dB | | |
| | Directive antenna: 1.2 dB | | |
| Service link | 3GPP defined New Radio | | |
| Feeder link | 3GPP or non-3GPP defined | 3GPP or non-3GPP defined | |
| | Radio interface | Radio interface | |

- NOTE 1: Each satellite has the capability to steer beams towards fixed points on earth using beamforming techniques. This is applicable for a period of time corresponding to the visibility time of the satellite
- NOTE 2: Max delay variation within a beam (earth fixed user equipment) is calculated based on Min Elevation angle for both gateway and user equipment
- NOTE 3: Max differential delay within a beam is calculated based on Max beam foot print diameter at nadir
- NOTE 4: Speed of light used for delay calculation is 299792458 m/s.
- NOTE 5: The Maximum beam foot print size for GEO is based on current state of the art GEO High Throughput systems, assuming either spot beams at the edge of coverage (low elevation).
- NOTE 6: The maximum differential delay at cell level has been computed considering the one at beam level for largest beam size. It doesn't preclude that cell may include more than one beam when beam size are small or medium size. However the cumulated differential delay of all beams within a cell will not exceed the maximum differential delay at cell level in the table above.

The NTN study results apply to GEO scenarios as well as all NGSO scenarios with circular orbit at altitude greater than or equal to 600 km.

Hereinafter, the NTN reference point will be described.

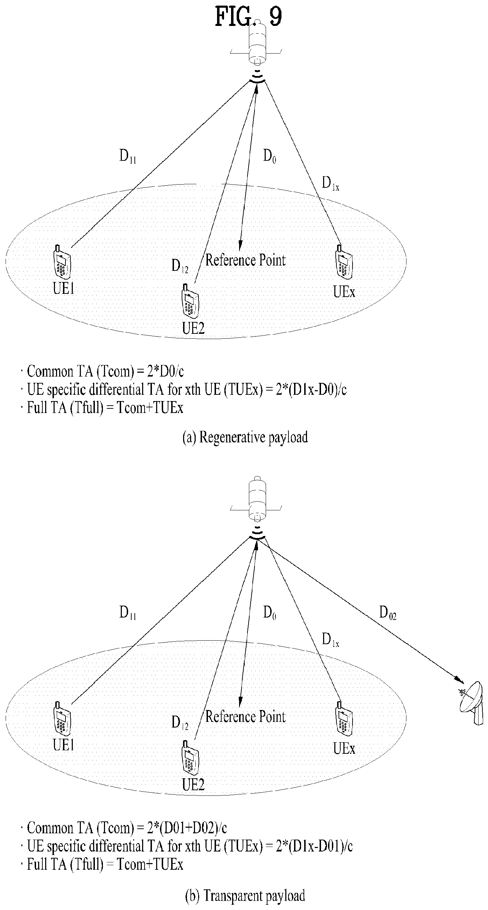

FIG. 9 illustrates TA components of the NTN. Here, the TA offset (NTAoffset) may not be plotted.

With consideration on the larger cell coverage, long round trip time (RTT) and high Doppler, enhancements are considered to ensure the performance for timing and frequency synchronization for LTL transmission.

Referring to FIG. 9, a reference point related to timing advance (TA) of initial access and subsequent TA maintenance/management is illustrated. Terms defined in relation to FIG. 9 are described below.
- Option 1: Autonomous acquisition of the TA at LTE with LTE known location and satellite ephemeris.

Regarding option 1, the required TA value for UL transmission including PRACH can be calculated by the UE. The corresponding adjustment can be done, either with UE-specific differential TA or full TA (consisting of LTE specific differential TA and common TA).

W.r.t the full TA compensation at the UE side, both the alignment on the UL timing among UEs and DL and UL frame timing at network side can be achieved. However, in case of satellite with transparent payload, further discussion on how to handle the impact introduced by feeder link will be conducted in normative work. Additional needs for the network to manage the timing offset between the DL and UL frame timing can be considered, if impacts introduced by feeder link is not compensated by LTE in corresponding compensation.

W.r.t the UE specific differential TA only, additional indication on a single reference point should be signalled to LTEs per beam/cell for achieving the LTL timing alignment among UEs within the coverage of the same beam/cell. Timing offset between DL and UL frame timing at the network side should also be managed by the network regardless of the satellite payload type.

With concern on the accuracy on the self-calculated TA value at the LTE side, additional TA signalling from network to LTE for TA refinement, e.g., during initial access and/or TA maintenance, can be determined in the normative work.
- Option 2: Timing advanced adjustment based on network indication

Regarding option 2, the common TA, which refers to the common component of propagation delay shared by all UEs within the coverage of same satellite beam/cell, is broadcasted by the network per satellite beam/cell. The calculation of this common TA is conducted by the network with assumption on at least a single reference point per satellite beam/cell.

The indication for UE-specific differential TA from network as the Rel-15 TA mechanism is also needed. For satisfying the larger coverage of NTN, extension of value range for TA indication in RAR, either explicitly or implicitly, is identified. Whether to support negative TA value in corresponding indication will be determined in the normative phase. Moreover, indication of timing drift rate, from the network to UE, is also supported to enable the TA adjustment at UE side.

For calculation of common TA in the above two options, single reference point per beam is considered as the baseline. Whether and how to support the multiple reference points can be further discussed in the normative work.

For the LTL frequency compensation, at least for LEO system, the following solutions are identified with consideration on the beam specific post-compensation of common frequency offset at the network side:

- Regarding option 1, both the estimation and pre-compensation of UE-specific frequency offset are conducted at the UE side. The acquisition of this value can be done by utilizing DL reference signals, UE location and satellite ephemeris.

- Regarding option 2, the required frequency offset for LTL frequency compensation at least in LEO systems is indicated by the network to UE. The acquisition on this value can be done at the network side with detection of UL signals, e.g., preamble.

Indication of compensated frequency offset values by the network is also supported in case that compensation of the frequency offset is conducted by the network in the uplink and/or the downlink respectively. However, indication of Doppler drift rate is not necessary.

Hereinafter, more delay-tolerant re-transmission mechanisms will be described in detail.

As follows, two main aspects of a retransmission mechanism with improved delay tolerance can be discussed.
- Disabling of HARQ in NR NTN
- HARQ optimization in NR-NTN

HARQ Round Trip Time in NR is of the order of several ms. The propagation delays in NTN are much longer, ranging from several milliseconds to hundreds of milliseconds depending on the satellite orbit. The HARQ RTT can be much longer in NTN. It was identified early in the study phase that there would be a need to discuss potential impact and solutions on HARQ procedure. RAN1 has focused on physical layer aspects while RAN2 has focused on MAC layer aspects.

In this regard, disabling of HARQ in NR NTN may be considered.

It was discussed that when UL HARQ feedback is disabled, there could be issues if (i) MAC CE and RRC signalling are not received by UE, or (ii) DL packets not correctly received by UE for a long period of time without gNB knowing it.

The following were discussed without convergence on the necessity of introducing such solutions for NTN when HARQ feedback is disabled
(1) Indicate HARQ disabling via DCI in new/re-interpreted field
(2) New UCI feedback for reporting DL transmission disruption and or requesting DL scheduling changes

The following possible enhancements for slot-aggregation or blind repetitions were considered. There is no convergence on the necessity of introducing such enhancements for NTN.
(1) Greater than 8 slot-aggregation
(2) Time-interleaved slot aggregation
(3) New MCS table

Next, a method for optimizing HARQ for the NR NTN will be described.

Solutions to avoid reduction in peak data rates in NTN were discussed. One solution is to increase the number of HARQ processes to match the longer satellite round trip delay to avoid stop-and-wait in HARQ procedure. Another solution is to disable UL HARQ feedback to avoid stop-and-wait in HARQ procedure and rely on RLC ARQ for reliability. The throughput performance for both types of solutions was evaluated at link level and system level by several contributing companies.

The observations from the evaluations performed on the effect of the number of HARQ processes on performance are summarized as follows:
- Three sources provided link-level simulations of throughput versus SNR with the following observations:
   • One source simulated with a TDL-D suburban channel with elevation angle of 30 degrees with BLER target of 1% for RLC ARQ with 16 HARQ processes, and BLER targets 1% and 10% with 32/64/128/256 HARQ processes. There was no observable gain in throughput with increased number of HARQ processes compared to RLC layer retransmission with RTT in {32, 64, 128, 256} ms.
   • One source simulated with a TDL-D suburban channel with elevation angle of 30 degrees with BLER targets of 0.1% for RLC ARQ with 16 HARQ processes, and BLER targets 1% and 10% with 32 HARQ processes. An average throughput gain of 10% was observed with 32 HARQ processes compared to RLC ARQ with 16 HARQ processes with RTT = 32 ms.
   • One source provides the simulation results in following cases with RTT = 32 ms, e.g., assuming BLER targets at 1% for RLC ARQ with 16 HARQ processes, BLER targets 1% and 10% with 32 HARQ processes. There is no observable gain in throughput with 32 HARQ processes compared to RLC ARQ with 16 HARQ processes in case that channel is assumed as TDL-D with delay spread/ K-factor taken from system channel model in suburban scenario with elevation angle 30. Performance gain can be observed with other channels, especially, up to 12.5% spectral efficiency gain is achieved in case that channel is assumed as TDL-A in suburban with 30° elevation angle. Moreover, simulation based on the simulation with consideration on other scheduling operations: (i) additional MCS offset, (ii) MCS table based on lower efficiency (iii) slot aggregation with different BLER targets are conducted. Significant gain can be observed with enlarging the HARQ process number.

One source provided system level simulations for LEO=1200 km with 20% resource utilization, 16 and 32 HARQ processes, 15 and 20 UEs per cell, proportional fair scheduling, and no frequency re-use. The spectral efficiency gain per user with 32 HARQ processes compared to 16 HARQ processes depends on the number of UEs. With 15 UEs per beam, an average spectral efficiency gain of 12% at 50% per centile is observed. With 20 UEs per cell there is no observable gain.

The following options were considered with no convergence on which option to choose:
- Option A: Keep 16 HARQ process IDs and rely on RLC ARQ for HARQ processes with UL HARQ feedback disabled via RRC
- Option B: Greater than 16 HARQ process IDs with UL HARQ feedback enabled via RRC with following consideration. In this case, in the case of 16 or more HARQ process IDs, maintenance of a 4-bit HARQ process ID field in UE capability and DCI may be considered.

Alternatively, the following solutions may be considered for 16 or more HARQ processes keeping the 4-bit HARQ process ID field in DCI:
- Option A: Keep 16 HARQ process IDs and rely on RLC ARQ for HARQ processes with UL HARQ feedback disabled via RRC
- Option B: Greater than 16 HARQ process IDs with UL HARQ feedback enabled via RRC with following consideration. In this case, in the case of 16 or more HARQ process IDs, maintenance of a 4-bit HARQ process ID field in UE capability and DCI may be considered.

Alternatively, the following solutions may be considered for 16 or more HARQ processes keeping the 4-bit HARQ process ID field in DCI:
Slot number based
Virtual process ID based with HARQ re-transmission timing restrictions
Reuse HARQ process ID within RTD (time window)
Re-interpretation of existing DCI fields with assistance information from higher layers
One source also considered solutions where the HARQ process ID field is increased beyond 4 bits

With regards to HARQ enhancements for soft buffer management and stop-and-wait time reduction, the following options were considered with no convergence on which, if any, of the options, to choose:
• Option A-1: Pre-active/pre-emptive HARQ to reduce stop-and-wait time
• Option A-2: Enabling / disabling of HARQ buffer usage configurable on a per UE and per HARQ process
• Option A-3: HARQ buffer status report from the UE

The number of HARQ processes with additional considerations for HARQ feedback, HARQ buffer size, RLC feedback, and RLC ARQ buffer size should be discussed further when specifications are developed.

The configurations (NR frame structure, NTN system, etc.) discussed above may be combined and applied in the contents described below, or may be supplemented to clarify the technical features of the methods proposed in the present disclosure. In addition, methods related to HARQ disabling, which will be described later, are related to LTL transmission and may be equally applied to the DL signal transmission method in the NR system or LTE system described above. It is to be noted that terms, expressions, structures, and the like defined in each system may be appropriately modified or replaced so that the technical idea proposed in this specification can be implemented in the corresponding system.

### Method of BWP operation for NTN

Currently, BWP switching in NR may include switching by DCI/MAC CE-based network command and switching operating based on timer (bwp-InactivityTimer). As a general operation of a basic operation of timer-based BWP switching, when a PDCCH scheduling a specific BWP is received, a BWP timer is (re)-started, and until the timer expires, when a UE receives a separate DL/LTL schedule, the time is restarted. Accordingly, the timer may specify a time point for switching to a default BWP or an initial BWP. Specifically, if there is no scheduling for BWP2 during a timer operation period while the UE stays in BWP2 after switching to a specific BWP (e.g., BWP1->BWP2), the UE switches the BWP to a default BWP or an initial BWP. This may be understood as a method to recover when understanding of BWP switching is different between a gNB and a UE.

Here, the timer may be defined as shown in Table 8.

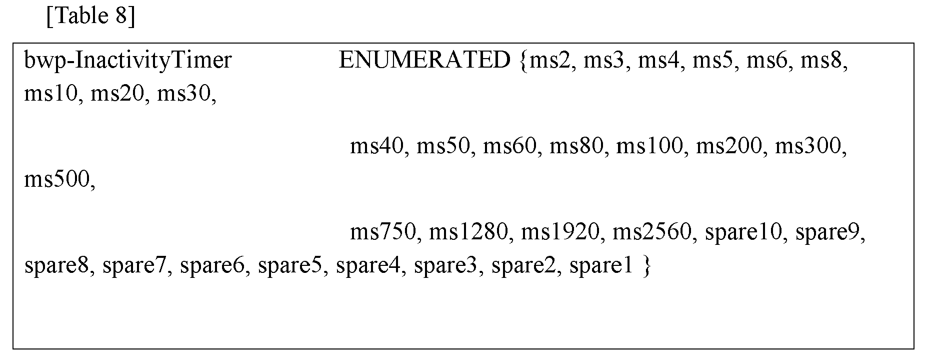

The BWP switching may be defined as Tables 9 and 10 below (refer to TS 38.213 and TS 38.321).

**[Table 9]**

| |
|---|
| If a UE is provided by *bwp-InactivityTimer* a timer value for the serving cell [11, TS 38.321] and the timer is running, the UE decrements the timer at the end of a subframe for FR1 or at the end of a half subframe for FR2 if the restarting conditions in [11, TS 38.321] are not met during the interval of the subframe for FR1 or of the half subframe for FR2. |
| For a cell where a UE changes an active DL BWP due to a BWP inactivity timer expiration and for accommodating a delay in the active DL BWP change or the active UL BWP change required by the UE [10, TS 38.133], the UE is not required to receive or transmit in the cell during a time duration from the beginning of a subframe for FR1, or of half of a subframe for FR2, that is immediately after the BWP inactivity timer expires until the beginning of a slot where the UE can receive or transmit. |
| When a UE's BWP inactivity timer for a cell within FR1 (or FR2) expires within a time duration where the UE is not required to receive or transmit for an active UL/DL BWP change in the cell or in a different cell within FR1 (or FR2), the UE delays the active UL/DL BWP change triggered by the BWP inactivity timer expiration until a subframe for FR1 of half a subframe for FR2 that is immediately after the UE completes the active UL/DL BWP change in the cell or in the different cell within FR1 (or FR2). |

**[Table 10]**

| |
|---|
| The MAC entity shall for each activated Serving Cell configured with *bwp-InactivityTimer*: |
| 1> if the *defaultDownlinkBWP-Id* is configured, and the active DL BWP is not the BWP indicated by the *defaultDownlinkBWP-Id,* and the active DL BWP is not the BWP indicated by the *dormantBWP-Id* if configured: or |
| 1> if the *defaultDownlinkBWP-Id* is not configured, and the active DL BWP is not the *initialDownlinkBWP,* and the active DL BWP is not the BWP indicated by the *dormantBWP-Id* if configured: |
| 2> if a PDCCH addressed to C-RNTI or CS-RNTI indicating downlink assignment or uplink grant is received on the active BWP; or |
| 2> if a PDCCH addressed to C-RNTI or CS-RNTI indicating downlink assignment or uplink grant is received for the active BWP; or |
| 2> if a MAC PDU is transmitted in a configured uplink grant and LBT failure indication is not received from lower layers; or |
| 2> if a MAC PDU is received in a configured downlink assignment: |
| 3> if there is no ongoing Random Access procedure associated with this Serving Cell; or |
| 3> if the ongoing Random Access procedure associated with this Serving Cell is successfully completed upon reception of this PDCCH addressed to C-RNTI (as specified in clauses 5.1.4, 5.1.4a and 5.1.5): |
| 4> start or restart the *bwp-InactivityTimer* associated with the active DL BWP. |
| 2> if the *bwp-inactivityTimer* associated with the active DL BWP expires: |
| 3> if the *defaultDownlinkBWP-Id* is configured: |
| 4> perform BWP switching to a BWP indicated by the *defaultDownlinkBWP-Id.* |
| 3> else: |
| 4> perform BWP switching to the *initialDownlinkBWP.* |
| NOTE: If a Random Access procedure is initiated on an SCell, both this SCell and the SpCell are associated with this Random Access procedure. |
| 1> if a PDCCH for BWP switching is received, and the MAC entity switches the active DL BWP: |
| 2> if the *defaultDownlinkBWP-Id* is configured, and the MAC entity switches to the DL BWP which is not indicated by the *defaultDownlinkBWP-Id* and is not indicated by the *dormantBWP-Id* if configured; or |
| 2> if the *defaultDownlinkBWP-Id* is not configured, and the MAC entity switches to the DL BWP which is not the *initialDownlinkBWP* and is not indicated by the *dormantBWP-Id* if configured: |
| 3> start or restart the *bwp-inactivityTimer* associated with the active DL BWP. |

In a system with a long round trip time (RTT) such as NTN, it may be promised that the corresponding BWP switching is completed after a time X (e.g., slot or symbol) from confirmation of the gNB or the LTE about BWP scheduling command (via PDCCH and/or MAC CE) for effective BWP switching, and data transmission (e.g., PDSCH or PUSCH) may be performed from the point of completion.

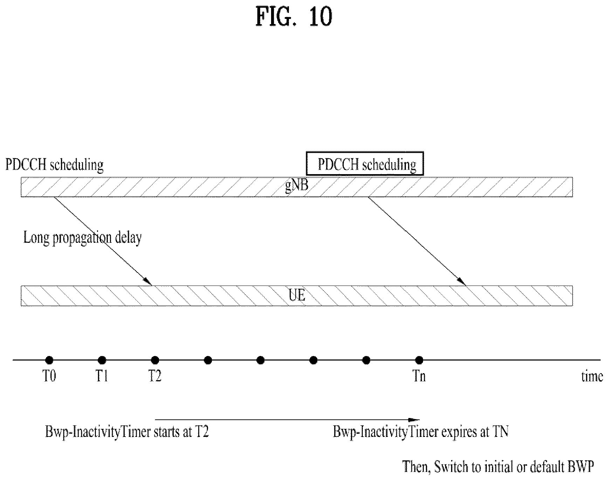

FIG. 10 is a diagram for explaining a timer-based BWP switching method.

Referring to FIG. 10, as described above, the UE may perform BWP switching based on a timer (e.g., bwp-InactivityTimer).

As described above, the timer may operate at a time point (e.g., T2) when a command (PDCCH in FIG. 10) for scheduling a specific BWP is received. The timer may be preset from RRC. If another scheduling command is not received until the timer expires (e.g., when the gNB does not transmit or misses the scheduling command), the UE may switch to a default BWP or an initial BWP.

If the PDCCH (PDCCH carrying the scheduling command of the specific BWP) is missed, a BS may know whether a UE properly switches to a BWP corresponding to the PDCCH after a minimum first time. Here, the first time may correspond to a time for which the command or the PDCCH is transmitted to the UE (Tp: propagation time) * 2 + time required until the timer expires (T_timer).

In the case of a system with a very long RTT, such as NTN, if reception of the PDCCH scheduling the specific BWP fails (or if a command to schedule the specific BWP is missed), the NTN may not be capable of determining that the UE operates properly in a BWP scheduled for a time of 2Tp + T_timer. In this case, as Tp due to RTT in the NTN greatly increases, resource waste becomes severe. In other words, when a command for switching to a specific BWP is not properly received by the UE, a resource for the specific BWP between the NTN and the UE is not capable of being used for 2Tp + T_timer, which may cause resource waste.

Hereinafter, proposals 1 to 3 related to performing BWP switching in the NTN to solve the above-mentioned problems will be described in detail.

### (1) Proposal 1

In relation to the above-described problem (the problem that it takes a long time to determine whether BWP switching operates), it is proposed that the corresponding BWP switching is completed (e.g., switching to a scheduled BWP) after a time X (e.g., slot or symbol) from check or confirmation of the gNB or the LTE in response to a command for requesting to switch the BWP to a specific BWP, transmitted to the UE from the BS. In this case, transmission of data (PDSCH/PUSCH) may be performed from the point at which BWP switching is completed.

For example, signaling for check or confirmation of scheduling related to BWP switching by the UE may be performed through ACK transmission for a DCI-based (e.g., PDCCH or UL grant) or MAC-CE-based command for scheduling the specific BWP or may be performed through explicit signaling.

Upon receiving approval or confirmation of the LTE, the BS or the NTN may expect or predict that the corresponding BWP switching is completed after a time X (or slots or symbols) from the approval or confirmation of the UE.

Alternatively, the BS may explicitly/implicitly instruct the UE to reconfirm the confirmation information (e.g., PUCCH-ACK information). That is, the BS may explicitly/implicitly transmit or forward feedback information (or 2^{nd} confirmation) indicating that confirmation information is correctly received from the UE to the UE. In this case, the BS or the NTN may recognize or expect that BWP switching (BWP switching in the UE) corresponding to the instruction is completed after a time X (e.g., slot or symbol) from the time of transmitting the feedback information of the BS (and/or the time of receiving the feedback information of the UE).

As such, the feedback information or information on the time point at which data is transmitted after signaling of confirmation of the UE may be defined in advance as being applied from a time X (or slot/symbol) from the signaling time of the confirmation of the UE. In this case, a scheduling parameter information of the PDSCH/PUSCH may be obtained from DCI or MAC-CE for scheduling a BWP (e.g., scheduling switching to a specific BWP), or may be indicated together when the BS signals the feedback information. In addition, the X value may use a previously agreed/set value or may be instructed by the BS to the LTE. For example, X may be a K_offset value newly introduced in the NTN, a command TA value, or may be obtained from a function thereof.

### 1) Proposal 1-1

In relation to a confirmation signal or confirmation in the above-described proposal 1, an operation time or restart time of a timer related to a BWP may be determined or specified.

Specifically, a (re)start time of a timer (bwp-InactivityTimer) related to the BWP may be a time Y (e.g., slot/symbol) after the confirmation signal is transmitted or received. For example, when based on the transmission time of the confirmation signal transmitted by the UE, the start or restart time of the timer is a time Y after the transmission time of the confirmation signal of the UE or reception of the confirmation signal by the BS.

Alternatively, when based on a feedback signal or confirmation signal (i.e., 2^{nd} confirmation) transmitted by the BS, the timer may be started or restarted after a time Y from a reception time of the UE of the feedback signal or confirmation signal transmitted by the BS or a transmission time of the feedback signal or confirmation signal of the BS.

Y in the proposal 1-1 may be replaced with the X value of the proposal 1, may be a previously agreed value, or may be set to an independent value by the BS. Then, when the set timer expires, the BWP may be switched to the initial BWP or the default BWP, similar to the existing operation.

### 2) Proposal 1-2

The BS may schedule PDSCH/PUSCH and instruct/command scheduling of a PDSCH/PUSCH and BWP switching through a PDCCH (or a signal instructing/commanding BWP switching) in a system having a long RTT such as an NTN. In this case, the scheduled PDSCH/PUSCH may be transmitted and received in the existing BWP, and the BWP switching may be performed after ACK/NACK transmission of the PDSCH or a time N (e.g., slot or symbol) after transmission of the PUSCH.

According to a specific scenario, the PDCCH may also schedule switching to a specific BWP while scheduling the PDSCH or the PUSCH. In this case, the LTE performs reception of the PDSCH scheduled in the PDCCH and/or transmission of the PUSCH through a specific BWP indicated together. However, as described above, when switching to a specific BWP is not performed properly, there is a possibility of wasting resources due to a long RTT in the NTN system, and the above-described specific scenario may not be appropriate in the NTN system.

Therefore, in the NTN system, when the UE is instructed to switch to a specific BWP on the PDCCH together with the PDSCH (or PUSCH), the UE may receive the PDSCH from the existing BWP, and transmit ACK/NACK for the received PDSCH (in the case of TDD, since DL-UL BWP is associated, ACK/NACK is also transmitted in the existing BWP), or perform BWP switching to the specific BWP after a certain time (e.g., N slots or symbols) from transmission of the PUSCH through the existing BWP. With this operation, the gNB may confirm that the PDCCH is correctly received through reception of ACK/NACK or a PUSCH, and resolve the ambiguity between the gNB and the UE regarding whether the indicated BWP switching operation is completed. In this case, the aforementioned confirmation signal may be implicitly signaled through transmission of the PUSCH or ACK/NACK for the PDSCH, or may be signaled separately in this case as well.

Separately from the methods of proposal 1 and proposal 1-1, methods for resolving the ambiguity in understanding of BWP switching between a BS and a LTE according to proposal 2 below may be considered.

### (2) Proposal 2

When scheduling a specific BWP for a UE, a BS may additionally configure or instruct information on whether additional scheduling is performed for the specific BWP (and/or offset information up to next scheduling, data scheduling duration, and whether BWP switching is performed) before a timer expires. For example, one piece of BWP scheduling information may include additional BWP scheduling information together with main BWP scheduling information.

In the above-described proposal 2, even if information for scheduling the specific BWP (i.e., information for scheduling a specific BWP to be additionally switched) is not properly received, there may be a technical effect of more rapidly resolving understanding of BWP configuration between the BS and the UE rather than performing a switching operation to the initial or default BWP by an inactivity timer.

For example, when the BS transmits information on whether to switch an additional BWP indicating whether switching to BWP 2 is capable of being performed next in scheduling information indicating switching of BWP 1, the UE may turn off the inactivity timer. In this case, even if specific scheduling information for switching of the second BWP is not properly received by the LTE, unexpected switching to the initial or default BWP due to expiration of the timer may be prevented. This may be more effective in a long RTT situation such as an NTN.

Specifically, when there is no information on additional BWP switching in scheduling information requesting switching to a specific BWP, the LTE may be preset to switch to an initial or default BWP when the timer expires. In contrast, when information on additional BWP switching is included in the scheduling information requesting switching to the specific BWP, the UE may not start or restart the timer.

Alternatively, the additional BWP scheduling information may be indicated through on/off information of an inactivity timer. For example, if the inactivity timer is instructed to be off, the UE may determine or decide that additional BWP scheduling is scheduled, and if the inactivity timer is instructed to be on, the LTE may determine or decide that there is no additional BWP scheduling.

Alternatively, the BS may predict a BWP corresponding to a specific time based on satellite orbit information. For example, in the NTN system, the BS needs to transmit/receive a signal with a LTE through a first BWP at a current point in time according to the orbit information, and after a predetermined time elapses, the BS may predict that signal transmission and reception with the UE through a second BWP is advantageous based on the orbit information of the BS. In this case, the BS may further include additional scheduling indicating that switching to the second BWP is to be performed later in scheduling information indicating switching to the first BWP based on orbit information.

### (3) Proposal 3

In a system such as an NTN, a problem may arise when propagation delay or RTT is longer than the corresponding inactivity timer. Considering this point, a method of increasing a range of a duration of the timer configured in the NTN or adding an additional timing offset (e.g., K_offset) for the NTN to a predefined duration may be considered.

Referring to FIG. 10, the BS may need to instruct switching to another BWP (a marked second PDCCH) before the inactivity timer for the BWP expires. In this case, the BS needs to schedule switching instruction to the other BWP within the TN time point (or before expiration of the inactivity timer) in consideration of propagation delay in the NTN system.

However, a problem may occur when propagation delay is longer than a time configured in the inactivity timer in an operation of dynamic BWP switching. In this case, in the NTN system, the BS may configure the time for the inactivity timer to be sufficiently longer than the propagation delay, RTT, and/or K_offset. When the duration of the inactivity timer used in the existing NR is used, the expiration time may be configured by adding an additional timing offset to the inactivity timer.

Alternatively, the BS may determine whether to add an additional timing offset to the inactivity timer based on satellite orbit information. Specifically, the BS may predict a positional relationship between the BS (or satellite) and the UE after a predetermined time according to the orbit information of the satellite, and based on the predicted positional relationship, the BS may determine whether switching to the other BWP is necessary before expiration of the inactivity timer. If there is a need to switch to the other BWP before expiration of the inactivity timer, the BS may additionally instruct the LTE to add an additional timing offset to increase the duration of the inactivity timer.

Here, the additional timing offset may correspond to K_offset. For example, a BWP switching timer may expire after time duration + offset (e.g., K_offset) configured as a higher layer parameter (e.g., bwp-InactivityTimer). Alternatively, the (re)start time point of the inactivity timer may be delayed after a specific offset. For example, in FIG. 10, a start time of the inactivity timer for the UE may be delayed to a time corresponding to T2+K_offset.

The above-described scheduling of BWP switching may directly indicate a BWP index to be switched or indirectly indicate a BWP index to be switched based on a beam direction.

Methods, embodiments or descriptions for implementing the method proposed in the present disclosure (e.g., proposal 1, proposal 1-1, proposal 1-2, proposal 2 and/or proposal 3, etc.) may be applied separately or one or more methods (or embodiments or descriptions) may be applied in combination.

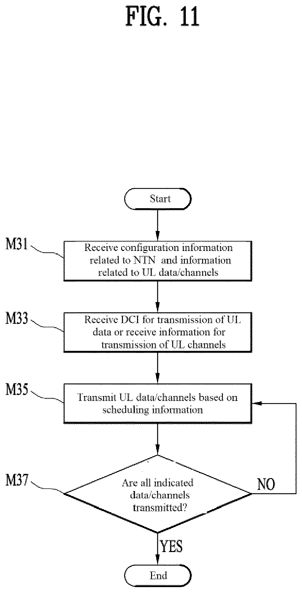

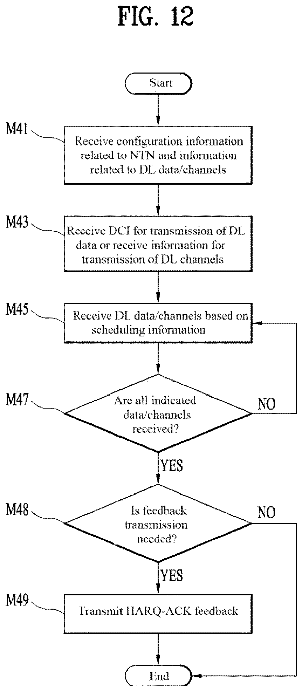

FIG. 11 is a flowchart for explaining a method of performing a LTL transmission operation by a UE based on the above-described embodiments, and FIG. 12 is a flowchart illustrating a method of performing a DL reception operation by a UE based on the above-described embodiments.

The UE may perform NR NTN or LTE NTN transmission and reception of one or more physical channels/signals based on at least one of the above proposals 1, 1-1, 1-2, 2 and 3. At least one step shown in FIGS. 11 and 12 may be omitted depending on circumstances or settings, and the steps shown in FIGS. 11 and 12 are only described for convenience of description and may not limit the scope of the present disclosure.

Referring to FIG. 11, the UE may receive NTN-related configuration information, LTL data, and/or information related to a UL channel (M31). Then, the UE may receive DCI/control information for transmitting UL data and/or a UL channel (M33). The DCI/control information may include scheduling information for transmission of the UL data/LTL channel. Then, the UE may transmit UL data/LTL channel based on the scheduling information (M35). The UE may transmit UL data/LTL channels until all configured/instructed UL data/LTL channels are transmitted, and when all UL data/LTL channels are transmitted, the corresponding uplink transmission operation may be terminated (M37).

Referring to FIG. 12, the LTE may receive NTN-related configuration information, DL data, and/or information related to a DL channel (M41). Then, the UE may receive DCI/control information for DL data and/or DL channel reception (M43). The DCI/control information may include scheduling information of the DL data/DL channel. The UE may receive DL data/DL channel based on the scheduling information (M45). The UE may receive DL data/DL channels until all configured/instructed DL data/DL channels are received, and if all DL data/DL channels are received, the LTE may determine whether feedback information for the received DL data/DL channels is required to be transmitted (M47 and M48). If transmission of feedback information is necessary, HARQ-ACK feedback may be transmitted, and if not necessary, a reception operation may be terminated without transmitting HARQ-ACK feedback (M49).

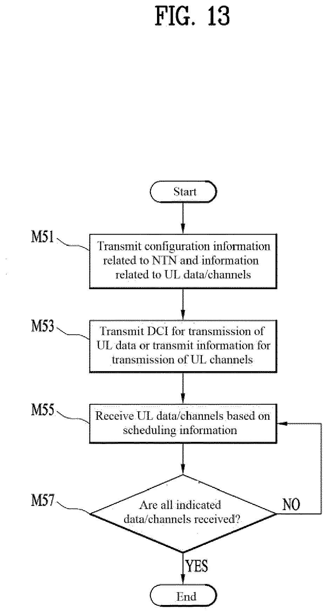

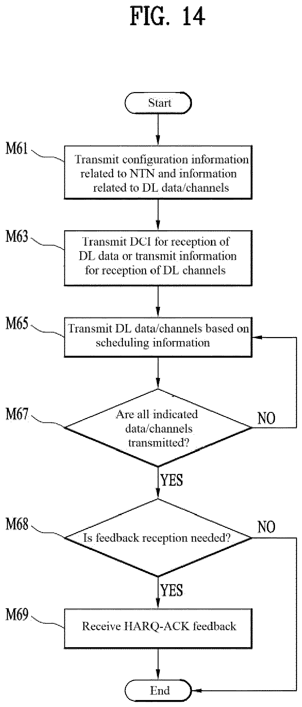

FIG. 13 is a flowchart for explaining a method for performing a UL reception operation by a BS based on the above-described embodiments, and FIG. 14 is a flowchart illustrating a method for performing a DL transmission operation by a BS based on the above-described embodiments.

The BS may perform NR NTN or LTE NTN transmission and reception of one or more physical channels/signals based on at least one of proposals 1, 1-1, 1-2, 2, and 3 described above. At least one step shown in FIGS. 13 and 14 may be omitted depending on circumstances or settings, and the steps shown in FIGS. 13 and 14 are only described for convenience of description and may not limit the scope of the present disclosure.

Referring to FIG. 13, the BS may transmit NTN-related configuration information, LTL data, and/or information related to a UL channel to the UE (M51). Then, the BS may transmit (to the UE) DCI/control information for transmission of UL data and/or UL channel (M53). The DCI/control information may include scheduling information for transmission of the UL data/LTL channel. The BS may receive (from the UE) UL data/LTL channel transmitted based on the scheduling information (M55). The BS may receive UL data/LTL channels until all configured/instructed UL data/UL channels are received, and when all UL data/UL channels are received, the corresponding uplink reception operation may be terminated (M57).

Referring to FIG. 14, the BS may transmit (to the LTE) NTN-related configuration information, DL data, and/or information related to a DL channel (M61). Then, the BS may transmit (to the LTE) DCI/control information for DL data and/or DL channel reception (M63). The DCI/control information may include scheduling information of the DL data/DL channel. The BS may transmit (to the UE) DL data/DL channel based on the scheduling information (M65). The BS may transmit DL data/DL channels until all set/instructed DL data/DL channels are transmitted, and when all DL data/DL channels are transmitted, the BS may determine whether reception of feedback information for the DL data/DL channels is required (M67 and M68). If reception of feedback information is required, the BS may receive HARQ-ACK feedback, and if not necessary, the BS may terminate a DL transmission operation without receiving HARQ-ACK feedback (M69).

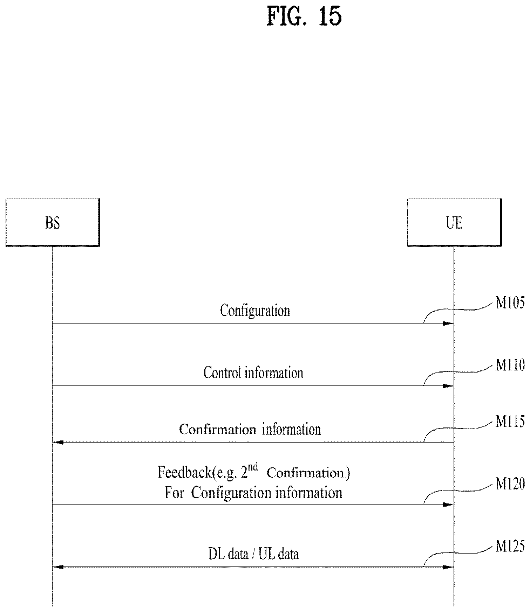

FIG. 15 is a diagram for explaining an operation of transmitting and receiving a UL channel between a UE and a BS.

Although not shown in FIG. 15, a default HARQ operation mode of the UE may be configured in a step prior to RRC connection/configuration. For example, when it is indicated through PBCH (MIB) or SIB that (a cell accessed by the UE) is an NTN cell, the UE may recognize that a default mode is configured to HARQ-disabled. For example, one of HARQ-disabled configuration and HARQ-enabled configuration(s) may be indicated as the default operation mode through PBCH (MIB) or SIB (e.g., when indicated as an NTN cell).

The UE may report capability information of the UE related to the above-described proposed method (e.g., proposal 1, proposal 1-1, proposal 1-2, proposal 2, and/or proposal 3) to the BS. For example, the capability information of the UE may be reported periodically/semi-persistent/aperiodically. The BS may configure/instruct the operations described below based on the capability information of the UE. Here, the UE capability information relates to transmit/receive capabilities to be supported by the UE, and may include the number of recommended HARQ processes, whether an autonomous power control parameter is to be updated based on satellite orbit information, and the like.

The BS may transmit configuration information to the UE (M105). That is, the UE may receive configuration information from the BS. For example, the configuration information may include NTN-related configuration information/configuration information for UL transmission/reception (e.g., PUCCH-config/PUSCH-config)/HARQ process-related configuration (e.g., whether to enable/disable HARQ feedback/the number of HARQ processes/HARQ process ID, etc.)/CSI report-related configuration (e.g., CSI report config/CSI report quantity/CSI-RS resource config, etc.), described in the above-described proposed methods (e.g., proposal 1, proposal 1-1, proposal 1-2, proposal 2, and/or proposal 3).

For example, the configuration information may include BWP information (e.g., information such as an index for a specific BWP to be switched), BWP timer information (e.g., bwp-InactivityTimer), and the like. Alternatively, as described in proposal 3 above, bwp-inactivityTimer may be configured in consideration of propagation delay IRTT /K _offset. Alternatively, the configuration information may be transmitted through higher layer (e.g., RRC or MAC CE) signaling. Alternatively, a command for scheduling a BWP based on the MAC CE may be delivered.

Then, the BS may transmit control information to the UE (M110). That is, the UE may receive control information from the BS. For example, the control information may be transmitted/received through DCI. Alternatively, the configuration information may include control information for UL data/LTL channel transmission/reception/scheduling information/resource allocation information/HARQ feedback related information (e.g., (e.g., New data indicator/Redundancy version/HARQ process number/Downlink assignment index/TPC command for scheduled PUCCH/PUCCH resource indicator/ PDSCH-to-HARQ_feedback timing indicator)/Modulation and coding scheme/ Frequency domain resource assignment. For example, the DCI may be one of DCI format 0_0 and DCI format 0_1.

Alternatively, as described in the above-described proposed methods (e.g., proposal 1, proposal 1-1, proposal 1-2, proposal 2, and/or proposal 3), the control information may include a command for scheduling a BWP, and based on the control information, BWP switching may be instructed and/or configured. In addition, the control information may further include scheduling information of an additional BWP.

The LTE may transmit confirmation information or a signal including the confirmation information to the BS (M115). That is, the BS may receive the confirmation information from the LTE. For example, as described in the above-described proposed methods (e.g., proposal 1, proposal 1-1, proposal 1-2, proposal 2, and/or proposal 3), the confirmation information may indicate confirmation for a command for scheduling a BWP to the BS. Alternatively, the confirmation information may be configured as ACK/NACK for a BWP scheduling command or in a separate signaling form. Alternatively, the BS may recognize that the corresponding BWP switching is completed after a time X (e.g., slot or symbol) from a confirmation time of the LTE or a transmission time of the confirmation information. Alternatively, a timer for a BWP (e.g., time duration indicated through bwp-InactivityTimer) may be (re)started after a time Y (e.g., slot or symbol) from the transmission/reception time of the confirmation information. Alternatively, in the NTN system, the time duration of the inactivity timer of the BWP may be configured longer by applying a specific offset (e.g., K_offset).

The LTE may receive a feedback signal (i.e., 2^{nd} conformation information) including the confirmation information from the BS (M120). That is, the BS may transmit a feedback signal (i.e., 2^{nd} conformation information) for the confirmation information to the UE. In some cases, the corresponding step may be omitted. For example, a timer for a BWP (e.g., bwp-InactivityTimer) may be (re)started after a time Y (e.g., slot and/or symbol) from the transmission/reception time of the feedback signal (i.e., 2^{nd} conformation information).

The UE may transmit and receive data with the BS (M125). For example, the UE may receive downlink data from the BS through a PDSCH. Alternatively, the UE may transmit uplink data to the BS through a PUSCH. Alternatively, as described in the above-described proposed methods (e.g., proposal 1, proposal 1-1, proposal 1-2, proposal 2, and/or proposal 3), transmission and reception of the data may be performed after BWP switching is completed. A time at which the BWP switching is completed may be determined based on the above-described proposed methods (e.g., proposal 1, proposal 1-1, proposal 1-2, proposal 2, and/or proposal 3).

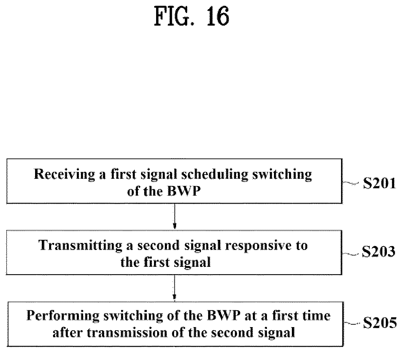

FIG. 16 is a diagram for explaining a method of performing an operation of switching a BWP by a UE.

Referring to FIG. 16, the UE may receive a first signal including scheduling information requesting BWP switching from the BS (S201). The scheduling information may include information on a BWP to be switched (a BWP index or a beam index related to the BWP index). Here, the first signal may be a PDCCH including Downlink Control Information (DCI) and/or Medium Access Control-Control Element (MAC-CE). In this case, the UE may obtain scheduling information related to switching of the BWP through the DCI or the MAC-CE. The UE may perform switching from a first BWP, which is an existing BWP, to a second BWP based on the scheduling information.

The UE may transmit a second signal confirming reception of the scheduling information related to switching of the BWP included in the first signal to the BS (S203). The second signal may be a signal including ACK for reception of the PDCCH or a signal separately defined for confirmation. Alternatively, the UE may receive a third signal, which is a response signal or feedback signal for reception of the second signal, from the BS.

The LTE may perform switching to a BWP scheduled by the first signal at a first point in time after the second signal is transmitted (S205). That is, the LTE may be configured to perform switching to the BWP after transmission of the second signal. In this case, even if the UE receives the first signal, the BWP switching may be delayed until a first point in time after transmission of the second signal, instead of immediately switching the BWP.

Specifically, the LTE may perform the BWP switching at a first time point that is a first preset time after the transmission time point of the second signal. When the UE is instructed to switch the BWP according to the first signal, the UE may delay switching to the scheduled BWP until the first time point and perform signal transmission and reception through the existing BWP. Alternatively, when the third signal is received, the UE may perform the BWP switching after the first preset time from the reception time of the third signal other than the second signal.

Alternatively, the UE may specify or determine a time to perform the BWP switching based on whether additional scheduling information is included in the first signal in addition to scheduling information of the BWP switching. Specifically, when the first signal includes scheduling information for the PDSCH, the UE may perform the BWP switching after the first preset time from the time of transmitting ACK/NACK for reception of the scheduled PDSCH. That is, the LTE may perform reception of the scheduled PDSCH and transmission of ACK/NACK corresponding thereto through the first BWP, which is the existing BWP, rather than the second BWP, which is the BWP scheduled by the first signal.

Alternatively, when the first signal includes scheduling information for the PUSCH, the UE may perform the BWP switching after the first preset time from the transmission time of the scheduled PUSCH. That is, the LTE may transmit the scheduled PUSCH through a first BWP that is an existing BWP rather than a second BWP scheduled by the first signal.

Alternatively, the LTE may specify or determine a start or restart time point of an inactivity timer (first timer) related to inactivity of the BWP based on a transmission time point of the second signal. Specifically, the LTE may operate or start the first timer at a second time point that is a second preset time after the transmission time point of the second signal.

For example, when the first timer operates according to reception of the first signal, the UE may perform switching to an unintended default or initial BWP due to expiration of the first timer when the first signal is not properly received. In contrast, the UE may maintain the existing BWP until receiving the first signal retransmitted from the BS by delaying an operation time of the first timer after the transmission time of the second signal as described above. For example, when the first signal is not properly received, the UE may not restart the first timer until the first signal is properly received.

Here, the second preset time may be preset to a value longer than a propagation delay or RTT between the BS and the UE, and may be preset to a value corresponding to the first preset time.

Alternatively, the LTE may receive a first signal further including information related to additional BWP switching (additional switching information). For example, the first signal may include scheduling information for scheduling switching from the first BWP to the second BWP and the additional switching information notifying that the second BWP is to be switched to another BWP. In this case, the UE may not restart or start the first timer at the second time point based on the additional switching information. That is, the UE may expect to receive the additional scheduling information again without switching the BWP to the initial or default BWP even if additional scheduling information indicating switching to the other BWP according to the additional switching information is not properly received later.

Alternatively, an additional offset may be applied to the duration of the first timer in consideration of RTT or propagation delay between the NTN and the LTE. Whether or not to apply the additional offset may be determined based on satellite orbit information in the NTN system as described above. That is, when BWP switching is required after the existing duration of the first timer based on satellite orbit information, the BS may instruct the UE to apply the additional offset for the duration of the first timer.

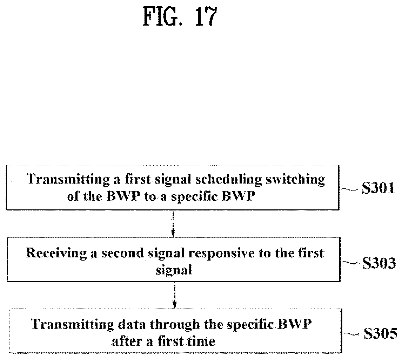

FIG. 17 is a diagram for explaining a method of scheduling BWP switching to a UE by a BS.

Referring to FIG. 17, the BS may transmit a first signal for scheduling switching to a second BWP, which is a specific BWP, to the UE (S301). The BS may predict a BWP to be switched in consideration of a positional relationship between the BS (or satellite) and the UE according to satellite orbit information. The first signal may be a PDCCH including Downlink Control Information (DCI) and/or Medium Access Control-Control Element (MAC-CE), and the scheduling information may be obtained through the DCI or the MAC-CE. In this case, the BS may instruct switching from a first BWP that is an existing BWP to a second BWP based on the scheduling information.

The BS may receive a second signal confirming reception of the scheduling information related to switching of the BWP included in the first signal from the UE (S303). The second signal may be a signal including ACK for reception of the PDCCH or a signal separately defined for confirmation.

Alternatively, the BS may transmit a third signal, which is a response signal or feedback signal for reception of the second signal, to the UE.

The BS may expect to switch to the BWP scheduled by the first signal at a first time point after the transmission time point of the second signal, and after the first time point elapses, the BS may transmit data about the UE through the second BWP (S305). That is, the BS may expect that the BWP switching is performed based on the transmission time point of the second signal, transmit data through the first BWP before the first time point, and transmit data through the second BWP after the first time point.

Specifically, the BS may expect switching of the BWP to be completed at a first time point that is a first preset time after the transmission time point of the second signal. That is, the BS may predict that switching to the scheduled BWP is to be delayed until the first time point, and transmit/receive a signal through the existing BWP until the first time point. Alternatively, when the BS is configured to transmit the third signal, the BS may expect that switching of the BWP is completed after the first preset time from the reception point of the third signal other than the second signal.

Alternatively, the BS may further include additional scheduling information in addition to the scheduling information of BWP switching in the first signal. In this case, the first time point may be specified as a time point after the first preset time from a time point other than the transmission time point of the second signal. Specifically, when the first signal includes scheduling information for the PDSCH, the BS may predict or expect that BWP switching is completed after the first preset time from the time when the LTE transmits ACK/NACK for reception of the PDSCH. That is, the BS may transmit the scheduled PDSCH through a first BWP that is an existing BWP rather than a second BWP that is a BWP scheduled by the first signal and receive ACK/NACK corresponding thereto.

Alternatively, the BS may further include scheduling information for the PUSCH in the first signal. In this case, the first time point may be specified as a time point after the first preset time from a time point other than the transmission time point of the second signal. Specifically, when the first signal includes scheduling information for the PUSCH, the BS may predict or expect that the BWP switching is completed after the first preset time from the time when the LTE transmits the PUSCH. That is, the BS may receive the PUSCH through a first BWP that is an existing BWP rather than a second BWP that is a BWP scheduled by the first signal.

Alternatively, the BS may expect or predict that a start or restart time of the inactivity timer (first timer) related to inactivity of the BWP is to be configured based on the transmission time of the second signal. Specifically, the BS may expect or predict that the start or restart time of the first timer in the LTE is to be configured to a second time point that is a second preset time after the transmission time of the second signal. Alternatively, the BS may instruct or configure the LTE to start or restart the inactivity timer (first timer) after a second preset time from the transmission time of the second signal through the first signal or a separate signal.

The second preset time may be preset to a value longer than the propagation delay or RTT between the BS and the UE, and may be preset to a value corresponding to the first preset time.

Alternatively, the BS may further include additional BWP switching-related information (additional switching information) in the first signal. For example, the first signal may include scheduling information for scheduling switching from the first BWP to the second BWP and the additional switching information notifying that the second BWP is to be switched to another BWP. In this case, the BS may expect or predict that the LTE is not to restart or start the first timer at the second time point based on the additional switching information. In this case, even if the UE does not properly receive additional scheduling information indicating switching to the other BWP according to the additional switching information later, the LTE may not be switched to the default or initial BWP due to expiration of the first timer, and thus the BS may retransmit the additional scheduling information through the second BWP and may instruct the UE to switch to the other BWP.

Alternatively, an additional offset may be applied to the duration of the first timer in consideration of RTT or propagation delay between the NTN and the LTE. Whether or not to apply the additional offset may be determined based on satellite orbit information in the NTN system as described above. That is, when BWP switching is required after the existing duration of the first timer based on satellite orbit information, the BS may instruct the UE to apply the additional offset for the duration of the first timer.

Hereinafter, devices performing the above-described methods (proposition 1, proposal 1-2, proposal 2, proposal 3, etc.) will be described in detail.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

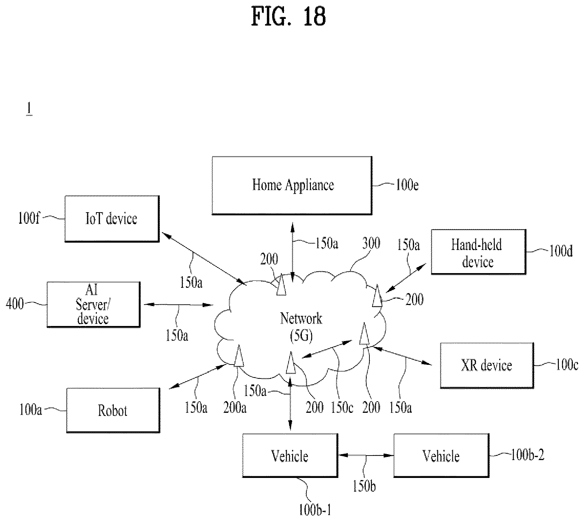

FIG. 18 illustrates a communication system applied to the present disclosure.

Referring to FIG. 18, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5GNR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

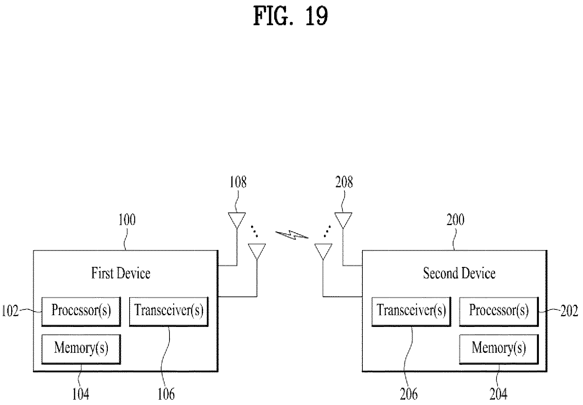

FIG. 19 illustrates a wireless device applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, the first wireless device 100 or the UE may include the processor 102 and the memory 104 connected to the RF transceiver. The memory 104 may include at least one program capable of performing an operation related to the embodiments described with reference to FIGS. 10 to 17.

Specifically, the processor 102 may control the RF transceiver 106 to receive a first signal including scheduling information requesting switching of the BWP and transmit a second signal in response to the first signal to the NTN, and perform BWP switching at a first time point after transmission of the second signal.

Alternatively, a chip set including the processor 102 and the memory 104 may be configured. In this case, the chipset may include at least one processor and at least one memory operatively connected to the at least one processor and, when executed, causing the at least one processor to perform an operation, the operation including receiving a first signal including scheduling information requesting BWP switching, transmitting a second signal in response to the first signal to the NTN, and performing the BWP switching at a first time point after transmitting the second signal.

Alternatively, a computer readable storage medium including at least one computer program for causing the at least one processor to perform an operation is provided, and here, the operation may include receiving a first signal including scheduling information requesting BWP switching, transmitting a second signal in response to the first signal to the NTN, and performing the BWP switching at a first time point after transmitting the second signal. In addition, the computer program may include programs capable of performing operations for the embodiments described in FIGS. 10 to 17.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

The BS or the NTN may include the processor 202, the memory 204, and/or the transceiver 206.

The processor may control the transceiver 206 or the RF transceiver 206 to transmit a first signal including scheduling information requesting switching to a specific BWP and to receive a second signal in response to the first signal from the LTE, and transmit data through the specific BWP after receiving the second signal. The processor 202 may perform the aforementioned operations based on the memory 204 included in at least one program capable of performing an operation related to the embodiments described in FIGS. 10 to 17.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

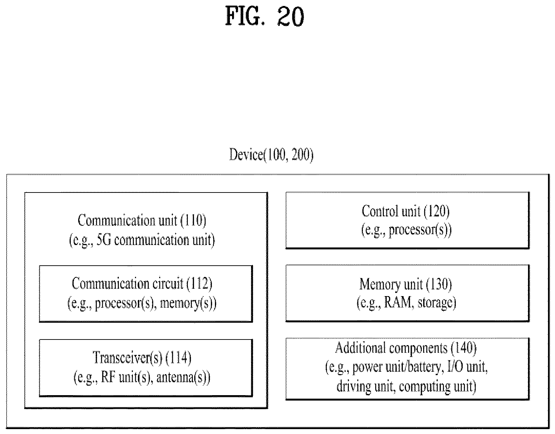

FIG. 20 illustrates another example of a wireless device applied to the present disclosure.

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (LTE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### [Industrial Applicability]

The above-described embodiments of the present disclosure are applicable to various mobile communication systems.

## Claims

1. A method of performing switching of a bandwidth part (BWP) by a user equipment (UE) in a wireless communication system supporting a non-terrestrial network (NTN), the method comprising:
receiving a first signal including scheduling information requesting the switching of the BWP;
transmitting a second signal in response to the first signal to a base station (BS); and
performing the switching of the BWP at a first time point after transmission of the second signal.

2. The method of claim 1, wherein the switching of the BWP is performed at the first time point after a first preset time from a transmission time of the second signal.

3. The method of claim 1, wherein the LTE operates a first timer related to inactivity of the BWP at a second time point after a second preset time from a transmission time of the second signal.

4. The method of claim 1, wherein the switching of the BWP is performed at a first time point after a first preset time from a transmission time of Acknowledgement/Negative Acknowledgement (ACK/NACK) for reception of the PDSCH based on the first signal including scheduling information of a Physical Data Shared Channel (PDSCH).

5. The method of claim 1, wherein the switching of the BWP is performed at a first time point after a first preset time from a transmission time of the PUSCH based on the first signal including scheduling information of a Physical Uplink Shared Channel (PUSCH).

6. The method of claim 5, wherein the PUSCH is transmitted through an existing BWP before switching to the BWP according to the scheduling information.

7. The method of claim 1, wherein the first signal further includes additional switching information about a switching possibility of an additional BWP.

8. The method of claim 7, wherein the UE skips operating of a first time of the BWP based on the first signal including the additional switching information.

9. The method of claim 3, wherein a preset offset is further added to a duration of the first timer based on propagation delay with the NTN.

10. The method of claim 1, wherein the scheduling information is obtained through DCI or MAC-CE included in the first signal.

11. A method of scheduling switching of a bandwidth part (BWP) to a user equipment (LTE) by a base station (BS) in a wireless communication system supporting a non-terrestrial network (NTN), the method comprising:
transmitting a first signal including scheduling information requesting switching to a specific BWP;
receiving a second signal in response to the first signal from the UE; and
transmitting data through the specific BWP after a reception time point of the second signal.

12. A user equipment (UE) for performing switching of a bandwidth part (BWP) in a wireless communication system supporting a non-terrestrial network (NTN), the UE comprising:
a radio frequency (RF) transceiver; and
a processor connected to the RF transceiver,
wherein the processor controls the RF transceiver to receive a first signal including scheduling information requesting the switching of the BWP and transmit a second signal in response to the first signal to the NTN, and performs the switching of the BWP at a first time point after transmission of the second signal.

13. A base station (BS) for scheduling switching of a bandwidth part (BWP) to a suer equipment (LTE) in a wireless communication system supporting a non-terrestrial network (NTN), the BS comprising:
a radio frequency (RF) transceiver; and
a processor connected to the RF transceiver,
wherein the processor controls the RF transceiver to transmit a first signal including scheduling information requesting switching to a specific BWP and receive a second signal in response to the first signal from the UE, and transmits data through the specific BWP after a reception time point of the second signal.

14. A chip set performing switching of a bandwidth part (BWP) in a wireless communication system supporting a non-terrestrial network (NTN), the chip set comprising:
at least one processor; and
at least one memory operatively connected to the at least one processor and configured to cause the at least one processor to perform an operation when executed,
wherein the operation includes:
receiving a first signal including scheduling information requesting the switching of the BWP;
transmitting a second signal in response to the first signal to the NTN; and
performing the switching of the BWP at a first time point after transmission of the second signal.

15. A computer readable storage medium including at least one computer program performing an operation for performing switching of a bandwidth part (BWP) in a wireless communication system supporting a non-terrestrial network (NTN), comprising:
at least one computer program configured to perform an operation of the switching of the BWP by the at least one processor; and
a computer readable storage medium with the at least one computer program stored therein,
wherein a first signal including scheduling information requesting the switching of the BWP is received, a second signal in response to the first signal is transmitted to the NTN, and the switching of the BWP at a first time point after transmission of the second signal is performed.
